# EUROPÄISCHE PATENTSCHRIFT

(11) **EP 0 349 482 B1**
(45) Veröffentlichungstag und Bekanntmachung des Hinweises auf die Patenterteilung: **15.09.1993**
(21) Anmeldenummer: 89810385.8
(22) Anmeldetag: 24.05.1989
(51) Int. Cl.: B25F 5/00

(54) **Motorisch betriebenes Handwerkzeug**
Motor-driven hand tool
Outil à main actionné par moteur

(30) Priorität: 27.06.1988 DE 3821594
(43) Veröffentlichungstag der Anmeldung: 03.01.1990
(73) Patentinhaber: HILTI Aktiengesellschaft, 9494 Schaan (LI)
(72) Erfinder: Lippacher, Wolfgang, D-8036 Herrsching-Breitbrunn (DE); Richter, Martin, Dr., D-8050 Freising (DE)
(74) Vertreter: Wildi, Roland

(56) Entgegenhaltungen:
- DE-A- 2 944 275
- DE-A- 3 623 648
- DE-A- 3 807 308
- GB-A- 1 447 867
- US-A- 4 386 689

## Beschreibung

Die Erfindung betrifft ein motorisch betriebenes Handwerkzeug mit in der Antriebskette angeordneter Sicherheitskupplung, die zwischen einem, dem Antriebsmotor zugeordneten antriebsseitigen Teil und einer Abtriebsspindel radial verschiebbare Kupplungskörper zur Uebertragung der Drehbewegung aufweist, wobei die Kupplungskörper mittels eines ringförmigen Betätigungsorgans in die das antriebsseitige Teil mit der Abtriebsspindel verbindende Stellung verschiebbar sind, vgl. DE-A-22 42 944.

Handwerkzeuge, wie Bohrmaschinen, Schrauber und dergleichen, erfordern zum Schutze der Bedienungsperson eine Sicherheitskupplung, die bei Blockieren des Werkzeugs im Bearbeitungsgut das Antriebsdrehmoment des Motors vom eingespannten Werkzeug entkuppelt, so dass die Bedienungsperson das Handwerkzeug zu halten vermag.

Das aus der DE-A-22 42 944 bekannte Handwerkzeug weist eine Sicherheitskupplung mit in einem antriebsseitigen Teil radial verschiebbaren und federbelasteten Kugeln als Kupplungskörper auf. Bei blockierendem Bohrer werden die Kupplungskörper gegen die Federkraft aus Mitnahmevertiefungen an einer zum Werkzeug führenden Abtriebsspindel gedrängt. Das antriebsseitige Teil kann sich so gegenüber der Abtriebsspindel verdrehen.

Bei dieser bekannten Ausbildung sind die Kupplungskörper auch nach dem Austreten aus den Vertiefungen der Abtriebsspindel mit Federkraft beaufschlagt und werden gegen die Abtriebsspindel gedrückt. Die im motorisch weiterdrehenden Teil gelagerten Kupplungskörper überspringen folglich fortlaufend die Vertiefungen der stillstehenden Abtriebsspindel, was ein erhebliches, von der Bedienungsperson aufzunehmendes Restdrehmoment wirkt. Dieses Restdrehmoment führt zu hoher Beanspruchung der Bedienungsperson.

Der Erfindung liegt die Aufgabe zugrunde, ein motorisch betriebenes Handwerkzeug mit einer zu keinem Restdrehmoment zwischen den zu kuppelnden Teilen führenden Sicherheitskupplung zu schaffen.

Erfindungsgemäss wird die Aufgabe dadurch gelöst, dass das Betätigungsorgan als gegenüber dem antriebsseitigen Teil in zwei Stellungen verdrehbare Trägheitsmasse ausgebildet ist, wobei die Trägheitsmasse Stützschultern und Ausweichnischen derart aufweist, dass in der einen Verdrehstellung die Stützschultern die Kupplungskörper in die das antriebsseitige Teil mit der Abtriebsspindel verbindende Lage verschieben und in der anderen Verdrehstellung die Ausweichnischen ein Verschieben der Kupplungskörper in eine das antriebsseitige Teil von der Abtriebsspindel lösende Lage ermöglichen.

In gekuppeltem Zustand werden die verschiebbar gelagerten Kupplungskörper von den Stützschultern der Trägheitsmasse in Mitnahmevertiefungen der Abtriebsspindel verschoben. Die vom Antriebsmotor auf das antriebsseitige Teil übertragene Drehbewegung wird über die Kupplungskörper an die Abtriebsspindel und von dieser über Zwischenglieder auf ein gegebenenfalls in einem Bohrfutter eingespanntes Werkzeug übertragen. Die Trägheitsmasse dreht mit, so dass der Kupplungseingriff der Kupplungskörper bestehen bleibt.

Kommt das Werkzeug, beispielsweise durch Blockieren im Bearbeitungsgut, zum Stillstand, bewirkt dies auch ein Stillsetzen des antriebsseitigen Teiles. Die mit dem antriebsseitigen Teil mitdrehende Trägheitsmasse gelangt aufgrund der Massenträgheit von der einen Verdrehstellung in die andere, so dass nach dem Stillstand des Werkzeugs die Ausweichnischen der Trägheitsmasse in die Verschiebeprojektion der Kupplungskörper gelangen. Das unter dem Antriebsdrehmoment des Antriebsmotors stehende antriebseitige Teil kann unter Ausrücken der Kupplungskörper aus den Mitnahmevertiefungen der Abtriebsspindel in die Ausweichnischen der Trägheitsmasse weiterdrehen. Für die Bedienungsperson treten keine wahrnehmbaren Antriebsdrehmomente mehr auf. Auch der Entkupplungsvorgang erfolgt so kurzzeitig, dass er von der Bedienungsperson nicht störend wahrgenommen wird.

Nach dem Stillsetzen des Antriebsmotors und dem Lösen des Werkzeugs im Bearbeitungsgut wird der Antriebsmotor wieder eingeschaltet, worauf die Kupplungskörper wieder in die Mitnahmevertiefung eintreten.

Vorzugsweise übergreift die Trägheitsmasse die Kupplungskörper und weist an der Innenkontur die Stützschultern und Ausweichnischen auf. Dadurch wird erreicht, dass der Masseschwerpunkt der Trägheitsmasse in Bezug auf deren Drehachse radial nach aussen verlagert wird, was zu hohen Trägheitskräften führt. Dies begüngstigt die relative Drehbewegung der Trägheitsmasse bei plötzlichem Stillstand des Werkzeugs und verbessert so den Auskupplungsvorgang.

Die Stützschultern sind in Antriebsdrehrichtung des antriebsseitigen Teiles mit Vorteil den Ausweichnischen vorgelagert. Einerseits wird dadurch gewährleistet, dass die Kupplungskörper bei plötzlichem Stillstand des Werkzeugs in die Ausweichnischen der in Antriebsdrehrichtung sich weiterdrehenden Trägheitsmasse gelangen können und andererseits das neuerliche Einkuppeln der Kupplungskörper beim Verdrehen des antriebsseitigen Teiles gegenüber der Trägheitsmasse in Antriebsdrehrichtung erfolgt.

Vorzugsweise ist am antriebsseitigen Teil und an der Trägheitsmasse eine der Begrenzung des Verdrehens der Trägheitsmasse gegenüber dem antriebsseitigen Teil in den Verdrehstellungen dienende Mitnahmeeinrichtung vorgesehen. Die Mitnahmeeinrichtung kann durch einen Bolzen am antriebsseitigen Teil gebildet sein, welcher in eine in Umfangsrichtung begrenzte, umlaufende Nut an der Trägheitsmasse eingreift. Dadurch wird eine formschlüssige Drehmitnahme der Trägheitsmasse erzielt, indem der Bolzen an dem antriebsdrehrichtungsseitigen Auslauf der Nut zur Drehmitnahme angreift.

Der Winkel zwischen den beiden Verdrehstellungen beträgt zweckmässig 20° bis 60°. Dieser Winkelbereich gewährleistet einerseits eine zuverlässige Haltefunktion der an die Ausweichnischen angrenzenden Stützschultern und andererseits ein raschen Entkuppeln bei blockierendem Werkzeug.

An dem antriebsseitigen Teil und an der Trägheitsmasse ist mit Vorteil eine Feder angeordnet, welche die Trägheitsmasse in die das antriebsseitige Teil über die Kupplungskörper mit der Antriebsspindel verbindende Verdrehstellung treibt. Als Feder eignet sich beispielsweise eine Spiralfeder, deren Enden in der Trägheitsmasse und im antriebsseitigen Teil festgelegt sind. Die Feder bewirkt ein automatisches Zurückdrehen der Trägheitsmasse in die die Kupplungskörper in Verbindungsstellung haltende Lage sobald die ausgerückten Kupplungskörper bei anlaufendem Antriebsmotor Mitnahmevertiefungen in der Abtriebsspindel gefunden haben.

Der Uebergang zwischen den Ausweichnischen und den Stützschultern ist zweckmässigerweise als Auflaufflanke ausgebildet, welche beispielsweise unter einem spitzen, sich in Antriebsdrehrichtung verjüngenden Winkel zur Umfangskontur des antriebsseitigen Teiles verläuft. Das Austreten der Kupplungskörper aus den Ausweichnischen beim Einsetzen der Drehbewegung des antriebsseitigen Teiles wird durch die Auflaufflanke erleichtert.

Die Erfindung wird nachstehend anhand von Zeichnungen, die ein Ausführungsbeispiel wiedergeben, näher erläutert. Es zeigen:
- Fig. 1: eine Bohrmaschine, gesamthaft in Ansicht;
- Fig. 2: einen vergrösserten Ausschnitt aus der Maschine nach Fig. 1, im Längsschnitt;
- Fig. 3: einen vereinfachten Schnitt durch die Maschine, gemäss Schnittverlauf III-III in Fig. 2;
- Fig. 3a: einen Schnitt analog Fig. 3, in anderer Funktionsstellung;
- Fig. 4: einen vereinfachten Schnitt durch die Maschine, gemäss Schnittverlauf IV-IV in Fig. 2;
- Fig. 4a: einen Schnitt analog Fig. 4, in Funktionsstellung wie Fig. 3a.

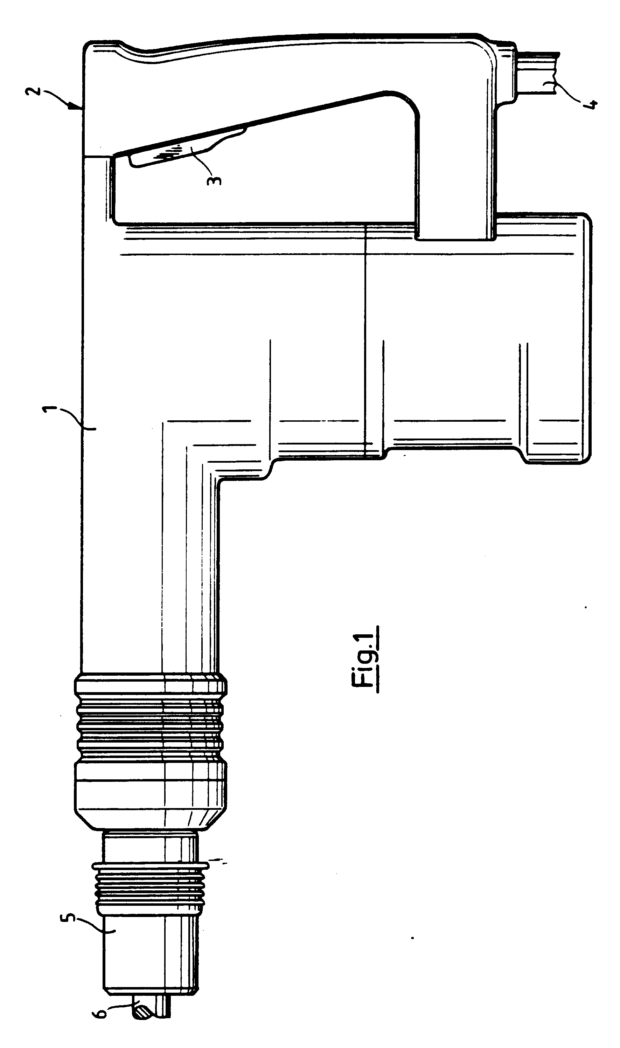

Die in Fig. 1 dargestellte Bohrmaschine verfügt über ein Gehäuse 1 mit einem Handgriff 2. Der Handgriff 2 ist mit einem Schalter 3 versehen und nimmt eine elektrische Anschlussleitung 4 auf. Bohrrichtungsseitig trägt das Gehäuse 1 einen Werkzeughalter 5, in welchem ein Werkzeug 6, beispielsweise ein Bohrer, drehschlüssig und axial gehalten wird.

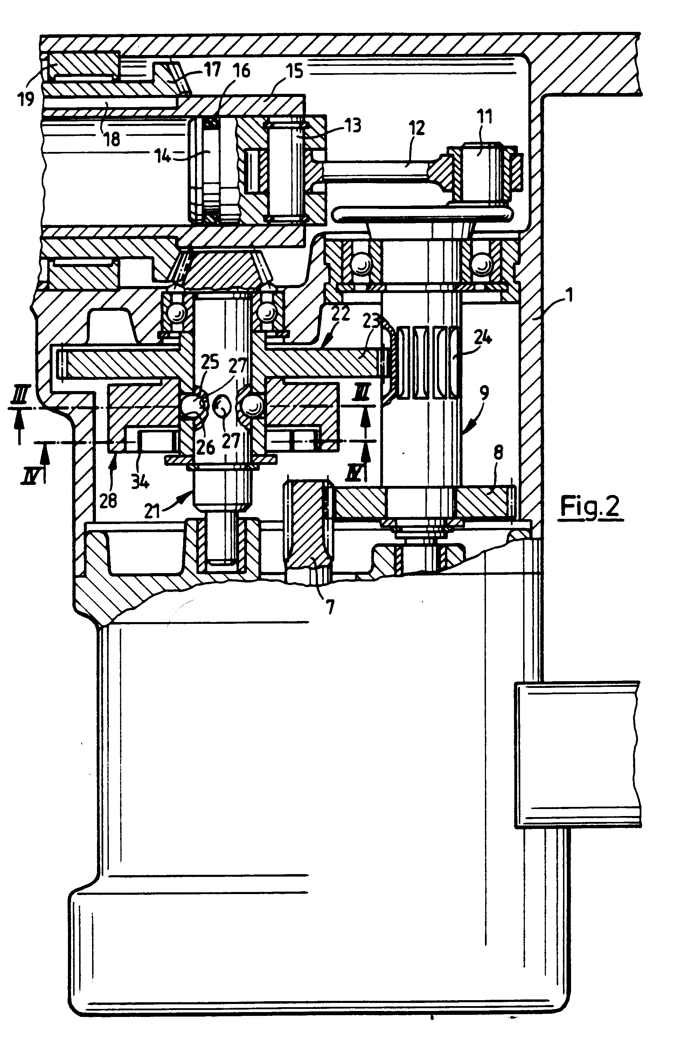

Die Fig. 2 zeigt den ein Getriebe und einen Antriebsmotor aufnehmenden Ausschnitt des Gehäuses 1. Der Antriebsmotor verfügt über ein der Fig. 2 entnehmbares Antriebsritzel 7. Dieses treibt ein Zahnrad 8 an, das drehfest auf einer gehäuseseitig gelagerten Welle 9 sitzt. Die Welle 9 trägt einen exzentrisch angeordneten Kurbelzapfen 11. Dieser treibt einen Pleuel 12 an, der über einen Lagerbolzen 13 einen Antriebskolben 14 in hin-und hergehende Bewegung versetzt. Der Antriebskolben 14 ist in einem drehbar gelagerten Führungszylinder 15 geführt und ist Teil eines an sich bekannten pneumatischen Kolbenschlagwerks. Zur Vermeidung von Luftverlusten des vor dem Antriebskolben 14 im Führungszylinder 15 liegenden Luftpolsters trägt der Antriebskolben 14 einen Dichtungsring 16.

Zum Drehantrieb des Führungszylinders 15 sitzt auf diesem konzentrisch ein Kegelzahnrad 17, das durch eine Feder 18 mit dem Führungszylinder 15 drehfest verbunden ist. Das Kegelzahnrad 17 ist durch ein Rollenlager 19 gegenüber dem Gehäuse 1 radial abgestützt. Dem Kegelzahnrad 17 vermittelte Drehbewegung wird so auf den Führungszylinder 15 und von diesem an das eingespannte Werkzeug 6 weitergeleitet.

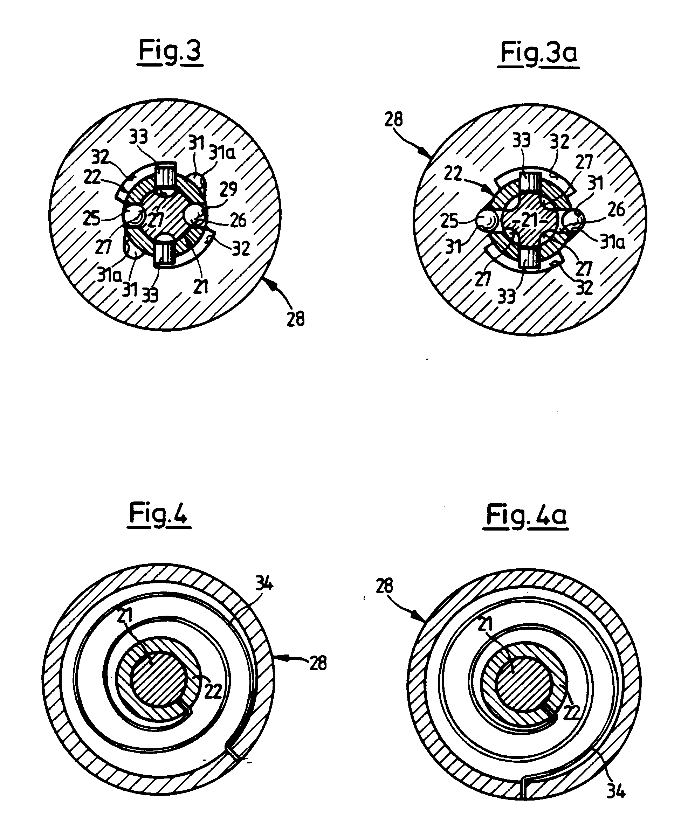

Zum Drehantrieb des Kegelzahnrades 17 kämmt mit diesem der Zahnkranz einer Abtriebsspindel 21. Diese ist im Gehäuse 1 zweiseitig drehgelagert. Auf der Abtriebsspindel 21 sitzt drehbar ein antriebsseitiges Teil 22 mit angeformtem Zahnrad 23, das mit einem Zahnkranz 24 der Welle 9 kämmt. Zur Uebertragung von Drehbewegung zwischen dem antriebsseitigen Teil 22 und der Abtriebsspindel 21 sind als Kugeln ausgebildete Kupplungskörper 25 vorgesehen. Diese sind in Durchtrittsöffnungen 26 des antriebsseiteigen Teiles 22 radial zur Achse der Abtriebsspindel 21 verschiebbar gelagert und ragen in Mitnahmevertiefungen 27 der Abtriebsspindel 21 ein. Eine auf dem antriebsseitigen Teil 22 drehbar angeordnete ringförmige Trägheitsmasse 28 hält, wie insbesondere die Fig. 3 verdeutlicht, mit Stützschultern 29 an der Innenkontur die Kupplungskörper 25 in eingerückter Stellung. Zweckmässig sind über den Umfang der Abtriebsspindel 21 verteilt ein Mehrfaches der Anzahl Kupplungskörper 25 an Mitnahmevertiefungen 27 vorhanden.

Entgegen der Antriebsdrehrichtung der Abtriebsspindel 21 schliessen an die Stützschultern 29 Ausweichnischen 31 für die Kupplungskörper 25 an. Antriebsdrehrichtungsseitig sind die Ausweichnischen 31 durch eine Auflaufflanke 31a begrenzt, die unter einem spitzen, sich in Antriebsdrehrichtung verjüngenden Winkel zur Umfangskontur des antriebsseitigen Teiles 22 verläuft.

Die Trägheitsmasse 28 ist innenseitig mit in Umfangsrichtung sich erstreckenden und begrenzten Nuten 32 versehen. In diese ragen radial im antriebsseitigen Teil 22 fixierte und dieses überstehende Bolzen 33 ein. Die Bolzen 33 wirken in Antriebsdrehrichtung mit den schulterartigen Ausläufen der Nuten 32 zusammen. Die Bolzen 33 bilden zusammen mit den Nuten 32 eine der formschlüssigen Drehmitnahme der Trägheitsmasse 28 durch das antriebsseitige Teil 22 dienende Mitnahmeeinrichtung. Eine zwischen der Trägheitsmasse 28 und dem antriebsseitigen Teil 22 vorgespannte Spiralfeder 34, wie sie in Fig. 4 verdeutlicht ist, hält die Bolzen 33 gegen den antriebsdrehrichtungsseitigen Auslauf der Nuten 32, dh in Mitnahmestellung (Fig. 3).

Im Betrieb vermittelt die Maschine dem Werkzeug 6 Drehbewegung, welche vom Antriebsmotor über das Antriebsritzel 7, das Zahnrad 8, die Welle 9, das Teil 22, die Kupplungskörper 25, die Abtriebsspindel 21, das Kegelzahnrad 17 und den Führungszylinder 15 eingeleitet wird. Kommt es im Zuge des Bohrbetriebes zu einem Blockieren des Werkzeugs 6 im Bearbeitungsgut, so werden auch die voran angeführten, in der Drehantriebskette liegenden Teile schlagartig stillgesetzt. Die zuvor mitdrehende Trägheitsmasse 28 läuft zufolge der Massenträgheit gegen die Kraft der Spiralfeder 34 in Antriebsdrehrichtung weiter. Das dadurch erfolgende relative Verdrehen der Trägheitsmasse 28 gegenüber dem antriebsseitigen, ebenso stillgesetzten Teil 22 bewirkt, dass unmittelbar nach erfolgtem Stillstand die Ausweichnischen 31 in die Verschiebeprojektion der Kupplungskörper 25 gelangen. Das vom Antriebsmotor her weiterhin auf das antriebsseitige Teil 22 einwirkende Drehmoment bewirkt ein Ausrücken der Kupplungskörper 25 aus den Mitnahmevertiefungen 27, indem die Kupplungskörper 25 in die Ausweichnischen 31 ausweichen können und das antriebsseitige Teil 22 somit gegenüber der weiterhin vom Werkzeug 6 her stillgehaltenen Abtriebsspindel 21 weiterdrehen kann. Die Fig. 3a zeigt diese entkuppelte Stellung. Die Spiralfeder 34 wird bei Erlangung dieser Stellung stärker gespannt, wie dies der Fig. 4a entnehmbar ist.

In der Funktionsstellung nach Fig. 3a wirken die Kupplungskörper 25 bei weiterdrehendem antriebsseitigen Teil 22 nicht auf die Abtriebsspindel 21 ein, was durch die Fliehkraft der mit dem antriebsseitigen Teil 22 mitlaufenden Kupplungskörper 25 unterstützt wird. Erst nach dem Freisetzen des Werkzeugs 6 und nach neuerlichem Einschalten des Antriebsmotors können die Kupplungskörper 25 bei der Anlaufdrehbewegung unter Gleiten entlang der Auflaufflanke 31a in Mitnahmevertiefungen 27 eintreten. Die Trägheitsmasse 28 führt hierbei eine durch die Spiralfeder 34 unterstützte relative Drehbewegung gegenüber dem antriebsseitigen Teil 22 entgegen der Antriebsdrehrichtung aus. Damit ist die den Fig. 2 und 3 entnehmbare gekuppelte Stellung wieder erreicht. Der Winkel, um den sich die Trägheitsmasse 28 zur Erlangung der beiden Verdrehstellungen gegenüber dem antriebsseitigen Teil 22 zu verdrehen vermag, beträgt etwa 45°.

## Patentansprüche

1. Motorisch betriebenes Handwerkzeug mit in der Antriebskette angeordneter Sicherheitskupplung, die zwischen einem, dem Antriebsmotor zugeordneten, antriebsseitigen Teil (22) und einer Abtriebsspindel (21) radial verschiebbare Kupplungskörper (25) zur Uebertragung der Drehbewegung aufweist, wobei die Kupplungskörper (25) mittels eines ringförmigen Betätigungsorgans in die das antriebsseitige Teil (22) mit der Abtriebsspindel (21) verbindende Stellung verschiebbar sind, **dadurch gekennzeichnet,** dass das Betätigungsorgan als gegenüber dem antriebsseitigen Teil (22) in zwei Stellungen verdrehbare Trägheitsmasse (28) ausgebildet ist, wobei die Trägheitsmasse (28) Stützschultern (29) und Ausweichnischen (31) derart aufweist, dass in der einen Verdrehstellung die Stützschultern (29) die Kupplungskörper (25) in die das antriebsseitige Teil (22) mit der Abtriebsspindel (21) verbindende Lage verschieben und in der anderen Verdrehstellung die Ausweichnischen (31) ein Verschieben der Kupplungskörper (25) in eine das antriebsseitige Teil (22) von der Abtriebsspindel (21) lösende Lage ermöglichen.

2. Handwerkzeug nach Anspruch 1, dadurch gekennzeichnet, dass die Trägheitsmasse (28) die Kupplungskörper (25) übergreift und an der Innenkontur die Stützschultern (29) und Ausweichnischen (31) aufweist.

3. Handwerkzeug nach Anspruch 1 oder 2, dadurch gekennzeichnet, dass die Stützschultern (29) in Antriebsdrehrichtung des antriebsseitigen Teiles (22) den Ausweichnischen (31) vorgelagert sind.

4. Handwerkzeug nach einem der Ansprüche 1 bis 3, dadurch gekennzeichnet, dass am antriebsseitigen Teil (22) und an der Trägheitsmasse (28) eine der Begrenzung des Verdrehens der Trägheitsmasse (28) gegenüber dem antriebsseitigen Teil (22) in den Verdrehstellungen dienende Mitnahmeeinrichtung (32, 33) vorgesehen ist.

5. Handwerkzeug nach einem der Ansprüche 1 bis 4, dadurch gekennzeichnet, dass der Winkel zwischen den beiden Verdrehstellungen 20° bis 60° beträgt.

6. Handwerkzeug nach einem der Ansprüche 1 bis 5, dadurch gekennzeichnet, dass am antriebsseitigen Teil (22) und an der Trägheitsmasse (28) eine Feder (34) angeordnet ist, welche die Trägheitsmasse (28) in die das antriebsseitige Teil (22) über die Kupplungskörper (25) mit der Antriebsspindel (21) verbindende Verdrehstellung treibt.

7. Handwerkzeug nach einem der Ansprüche 1 bis 6, dadurch gekennzeichnet, dass der Uebergang zwischen den Ausweichnischen (31) und den Stützschultern (29) als Auflaufflanke (31a) ausgebildet ist.

## Claims

1. Motor driven hand tool comprising a safety coupling arranged in the drive chain, having coupling elements (25) for transmitting the rotary movement, which are radially displaceable between an element (22), which is located on the drive and associated with the drive motor, and a drive spindle (21), wherein the coupling elements (25) are displaceable by means of an annular operating element into a position which connects the drive element (22) to the output spindle (21), **characterised in that** the operating element is arranged as an inert mass (28) which can be turned into two positions relative to the drive element (22), wherein the inert mass (28) comprises support shoulders (29) and yield recesses (31) so that in the one rotary position the support shoulders (29) displace the coupling elements (25) into a position which connects the drive element (22) to the output spindle (21), and in the other rotary position the yield recesses (31) permit displacement of the coupling elements (25) into a position which disconnects the drive element (22) from the output spindle (21).

2. Hand tool according to claim 1, **characterised in that** the inert mass (28) extends over the coupling elements (25), and that the support shoulders (29) have yield recesses (31) at the inside contour.

3. Hand tool according to claim 1 or 2, **characterised in that** the support shoulders (29) are mounted ahead of the yield recesses (31) relative to the rotary direction of the drive element (22).

4. Hand tool according to one of claims 1 to 3, **characterised in that** at the drive element (22) and at the inert mass (28) is provided a pickup mechanism (32, 33) which serves to limit the rotation of the inert mass (28) relative to the drive element (22) in the rotary positions.

5. Hand tool according to one of claims 1 to 4, **characterised in that** the angle between the two rotary positions lies between 20° and 60°.

6. Hand tool according to one of claims 1 to 5, **characterised in that** at the drive element (22) and at the inert mass (28) is arranged a spring (34) which drives the inert mass (28) into the rotary position which connects the drive element (22) via the coupling elements (25) to the drive spindle (21).

7. Hand tool according to one of claims 1 to 6, **characterised in that** the transition from the yield recesses (31) and the support shoulders (29) is arranged as a buffer flank (31).

## Revendications

1. Outil à main motorisé, comprenant un accouplement de sûreté disposé dans la chaîne d'entraînement, lequel comporte entre un élément (22) situé du côté entraînement et associé au moteur d'entraînement et une broche d'entraînement (21), des corps d' accouplement (25) déplaçables dans le sens radial et destinés à la transmission du mouvement de rotation, les corps d'accouplement (25) pouvant être amenés au moyen d'un organe de manoeuvre annulaire, à la position dans laquelle l'élément (22) situé du côté entraînement est couplé avec la broche d'entraînement (21), **caractérisé en ce** que l'organe de manoeuvre est conformé en une masse d'inertie (28) qui, par rapport à l'élément (22) situé du côté entraînement, peut être tournée dans deux positions, la masse d'inertie (28) présentant des épaulements d'appui (29) et des niches d'évitement (31), de manière que dans l'une des positions de rotation, les épaulements d'appui (29) déplacent les corps d'accouplement (25) dans la position dans laquelle l'élément (22) situé du côté entraînement est couplé avec la broche d'entraînement (21), et que dans l'autre position de rotation, les niches d'évitement (31) permettent un déplacement des corps d'accouplement (25) dans la position dans laquelle l'élément (22) du côté entraînement est découplé de la broche d'entraînement (21).

2. Outil à main selon la revendication 1, caractérisé en ce que la masse d'inertie (28) recouvre les corps d'accouplement (25) et présente sur le contour intérieur les épaulements d'appui (29) et les niches d'évitement (31).

3. Outil à main selon l'une des revendications 1 ou 2, caractérisé en ce que, vue dans le sens de rotation d'entraînement de l'élément (22) situé du côté entraînement, les épaulements d'appui (29) sont disposés en avant des niches d'évitement (31).

4. Outil à main selon l'une des revendications 1 à 3, caractérisé en ce que sur l'élément (22) du côté entraînement et sur la masse d'inertie (28) est prévu un dispositif d'entraînement (32, 33) qui limite la rotation de la masse d'inertie (28) par rapport à l'élément (22) situé du côté entraînement dans les positions de rotation.

5. Outil à main selon l'une des revendications 1 à 4, caractérisé en ce que l'angle entre les deux positions de rotation se situe entre 20° et 60°.

6. Outil à main selon l'une des revendications 1 à 5, caractérisé en ce que sur l'élément (22) du côté entraînement et sur la masse d'inertie (28) est monté un ressort (34) qui pousse la masse d'inertie (28) dans la position de rotation dans laquelle l'élément (22) du côté entraînement est couplé avec la broche d'entraînement (21) par l'intermédiaire des corps d'accouplement (25).

7. Outil à main selon l'une des revendications 1 à 6, caractérisé en ce que le passage entre les niches d'évitement (31) et les épaulements d'appui (29) est conformé en flanc d'arrêt (31a).
